# EUROPEAN PATENT APPLICATION

(11) **EP 1 862 916 A1**
(43) Date of publication of application: **05.12.2007**
(21) Application number: 06114850.8
(22) Date of filing: 01.06.2006
(51) Int. Cl.: G06F 17/30

(54) **Indexing Documents for Information Retrieval based on additional feedback fields**

(71) Applicant: Microsoft Corporation, Redmond WA 98052 (US)
(72) Inventor: Robertson, Stephen Microsoft Research Ltd., Cambridge, CB3 0FB (GB); Taylor, Michael Microsoft Research Ltd., Cambridge, Cambridgeshire CB3 0FB (GB); Craswell, Nick Microsoft Research Ltd., Cambridge, Cambridgeshire CB3 0FB (GB); Williams, Hugh, Redmond, WA 98052 (US)
(74) Representative: Free, Rachel Alder

(57) **Abstract**

Information retrieval systems such as web search systems locate documents amongst millions and even billions of possible documents on the basis of query terms. In order to achieve this document indexes are created. We propose creating new fields in the documents to store feedback information. This information comprises query terms used in a particular search as well as information about whether a particular document retrieved is given positive or negative feedback for example. Indexes are created on the basis of this feedback information in addition to other available information. As a result relevance of search results is improved. Multiple fields of information are available for given documents (such as abstract fields, title fields, anchor text fields as well as our feedback fields). Any search algorithm which deals with multiple fields as well as multiple query terms and which provides for differential weighting of document fields is used.

## Description

### TECHNICAL FIELD

This description relates generally to information retrieval. It is particularly related to, but in no way limited to, methods of ranking documents for use in search systems such as web searching systems.

### BACKGROUND

Web search systems are an example of one type of information retrieval system although the present invention is concerned with information retrieval systems of any type. Web search systems enable us to find web sites that best suit our requirements. Three main components are used to achieve this: web crawlers; index generators; and query servers.

Web crawlers crawl the web one link at a time and send identified web pages to be indexed. This is achieved by making use of links between web sites. This web crawling process can be thought of as a continual process of identifying new web sites and identifying updates to existing web sites.

The crawling process enables many billions of web pages to be identified and in order to make use of this information a systematic way of retrieving pages is required. An index generator provides part of this means. Similar to an index in the back of a book, the index generator identifies keywords to associate with each website's content. Then, when you search for those keywords, the search system can find the most appropriate pages out of the billions that are available.

The index generator includes such information as how often a term is used on a page, which terms are used in the page title, or in the index, for the subsequent use of the query server in ranking the documents. Other information such as the language that the web site is written in and information about how many other web sites link to the web site concerned can also be used.

A query server (also referred to as a search engine) is used to rank the index documents on the basis of how well they match user input search terms. The query server analyses the user search terms and compares them with the indexed web pages. It generates a rank or score for the indexed web pages on the basis of the user input search terms. In this way, web pages relevant to the user search terms are identified with scores or ranks to indicate the degree of likelihood of relevance.

There is an ongoing need to improve the relevance of items retrieved by information retrieval systems such as web search systems. In addition, there is a need to achieve this in a fast and computationally inexpensive manner, which reduces the need for storage resources where possible.

### SUMMARY

The following presents a simplified summary of the disclosure in order to provide a basic understanding to the reader. This summary is not an extensive overview of the disclosure and it does not identify key/critical elements of the invention or delineate the scope of the invention. Its sole purpose is to present some concepts disclosed herein in a simplified form as a prelude to the more detailed description that is presented later.

Information retrieval systems such as web search systems locate documents amongst millions and even billions of possible documents on the basis of query terms. In order to achieve this document indexes are created. We propose creating new fields in the documents to store feedback information. This information comprises query terms used in a particular search as well as information about whether a particular document retrieved is given positive or negative feedback for example. Indexes are created on the basis of this feedback information in addition to other available information. As a result relevance of search results is improved. Multiple fields of information are available for given documents (such as abstract fields, title fields, anchor text fields as well as our feedback fields). Any search algorithm which deals with multiple fields as well as multiple query terms and which provides for differential weighting of document fields is used.

The present example provides a method of forming an index of documents for use in an information retrieval system, said method comprising the steps of:
- specifying a plurality of fields, including at least one feedback field which can be used in association with each document;
- accessing a plurality of documents, and for each of those documents, populating at least some of the fields using information from the accessed documents;
- receiving feedback information comprising a plurality of query terms, an identifier for a particular one of the documents, and information about the type of feedback;
- for the particular one of the documents, populating a feedback field with the plurality of query terms on the basis of the information about the type of feedback;
- forming an index of the document on the basis of the populated fields;
- receiving a plurality of query terms;
- obtaining document statistics from the index on the basis of the query terms; and
- using a search algorithm to generate a ranked list of documents, the search algorithm being suitable for use with a plurality of query terms and a plurality of document fields and arranged to provide differential weighting of the fields.

This provides the advantage that by using feedback information and incorporating this into the documents, future searches are enhanced. This is achieved in a simple and effective manner which does not increase processing costs or time unduly.

A corresponding apparatus is provided for forming an index of documents for use in an information retrieval system, said apparatus comprising:
- an index generator arranged to specify a plurality of fields, including at least one feedback field which can be used in association with each document;
- the index generator having an interface arranged to access a plurality of documents, the index generator having a processor arranged to, for each of those documents, populate at least some of the fields using information from the accessed documents;
- the index generator having another interface arranged to receive feedback information comprising a plurality of query terms, an identifier for a particular one of the documents, and information about the type of feedback;
- the processor of the index generator being arranged to, for the particular one of the documents, populate a feedback field with the plurality of query terms on the basis of the information about the type of feedback;
- the processor of the index generator being arranged to form an index of the documents on the basis of the populated fields;
- an interface arranged to receive a plurality of query terms;
- a search engine arranged to obtain document statistics from the index on the basis of the query terms; the search engine comprising a search algorithm arranged to be implemented in the search engine to generate a ranked list of documents, the search algorithm being suitable for use with a plurality of query terms and a plurality of document fields and arranged to provide differential weighting of the fields.

Preferably the information about the type of feedback comprises information about whether the feedback is positive or negative.

Preferably the information about the type of feedback comprises information about whether the feedback is explicit or implicit.

Preferably the step of specifying fields comprises specifying a plurality of feedback fields each feedback field being for a different type of feedback.

Preferably the step of forming an index comprises generating document statistics on the basis of the fields and at least some feedback fields.

Preferably the index is repeatedly updated.

Preferably the index is updated sufficiently often that during a search, feedback information is dynamically incorporated into the documents and used to influence the ongoing search.

Preferably the feedback information is used to influence searching inter-query.

Preferably the method comprises emptying the feedback fields after a specified time period or adjusting weights associated with the feedback fields on the basis of elapsed time.

In one example the information retrieval system is an image retrieval system and the documents are images.

Another embodiment provides a computer program comprising computer program code means adapted to perform all the steps of any of the methods mentioned above when said program is run on a computer. For example, the computer program is embodied on a computer readable medium.

The method may be performed by software in machine readable form on a storage medium. The software can be suitable for execution on a parallel processor or a serial processor such that the method steps may be carried out in any suitable order, or simultaneously.

This acknowledges that software can be a valuable, separately tradable commodity. It is intended to encompass software, which runs on or controls "dumb" or standard hardware, to carry out the desired functions, (and therefore the software essentially defines the functions of the register, and can therefore be termed a register, even before it is combined with its standard hardware). For similar reasons, it is also intended to encompass software which "describes" or defines the configuration of hardware, such as HDL (hardware description language) software, as is used for designing silicon chips, or for configuring universal programmable chips, to carry out desired functions.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIG. 1 is a schematic diagram of an information retrieval system;
FIG. 2 is a schematic diagram of a document with document fields including feedback fields;
FIG. 3 is a schematic diagram of another information retrieval system;
FIG. 4 is a flow diagram of a method of generating or updating an index;
FIG. 5 is a flow diagram of a method of capturing feedback information and incorporating that into documents;
FIG. 6 is a flow diagram of a method of generating a ranked list of documents.

Like reference numerals are used to designate like parts in the accompanying drawings.

### DETAILED DESCRIPTION

The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different

### examples.

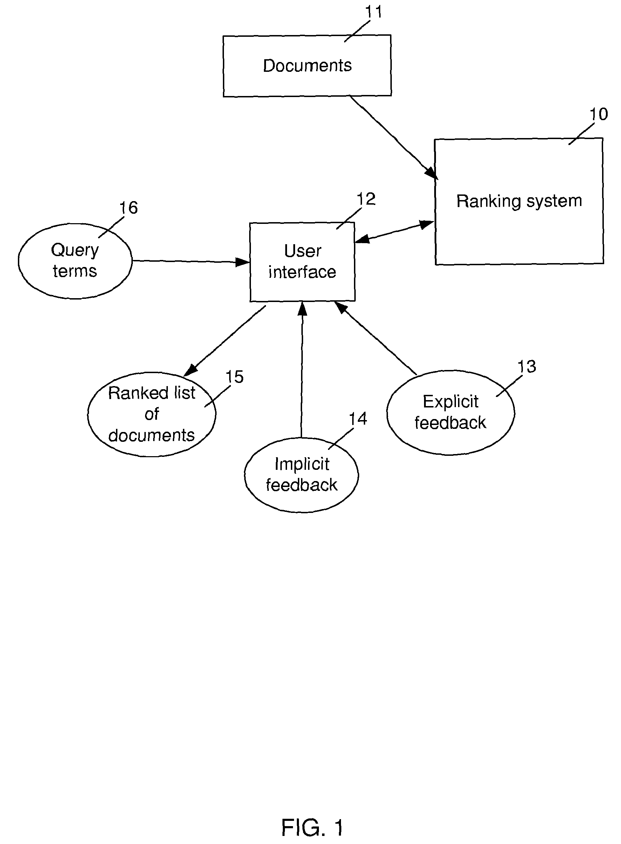

FIG. 1 is a schematic diagram of an information retrieval system suitable for implementing embodiments of the present invention. A ranking system 10 is able to access documents 11 which it is required to search to find relevant documents or parts of documents. The documents can be of any suitable type such as web pages, text documents in a document repository, images with associated text, video clips with associated text, database extracts, or any other suitable type of document which comprises or has associated text. The term "text" is used herein to refer to information comprising words, characters, symbols or numerals.

A user interface 12 is provided to enable a user to access the ranking system 10 in order to search for documents or parts of documents 11. The user interface is of any suitable form such as a web-based graphical user interface, natural language interface, text-based interface or other. The user interface enables a user (which may be a human user or an automated system) to enter query terms 16 which are presented to the ranking system 10. The ranking system 10 returns a ranked list of documents 15 which are presented to the user via the user interface 12. The documents are ranked in terms of their relevance to the user's query terms. In addition, the user interface is arranged to capture implicit feedback 14 and/or explicit feedback 13 from the user.

An extraction operation may be used to parse the query to determine the query terms. For example, a query term may be a single word or may include multiple component terms. For example, the phrase "document management system" can be considered a single query term or can be treated as three separate words. In addition, a query may include one or more operators, such as Boolean operators, symbols, numerals or other characters.

The term "explicit feedback" is used to refer to proactive feedback from a user about the relevance of the documents in the ranked list. It can also be thought of as an evaluation of one or more of the documents in the ranked list in view of the query terms used to obtain that ranked list. In order for feedback to be explicit, active user input is required in response to a query or request from the user interface. In contrast, for "implicit feedback" active user input in response to a query or request is not required. It can also be thought of as passive feedback. In addition, feedback can be either positive whereby one or more documents in the ranked list is indicated to be relevant, or negative whereby one or more documents in the ranked list is indicated to be irrelevant. Thus at least four possible types of feedback exist:

### positive explicit feedback

An example of positive explicit feedback involves presentation of a dialog box, task bar, buttons, or other user input means to enable a user to indicate whether a particular search result document was relevant. In this case the user makes a specific action to indicate that a search result was relevant. This action is optionally in response to a query from the user interface about relevance. For example, the query takes the form of a dialog box, voting buttons, audio prompt, visual prompt or similar.

### negative explicit feedback

An example of negative explicit feedback involves a user making a specific action in response to a prompt, query or request to indicate that a search result document was not relevant. Any suitable method can be used as discussed above for positive explicit feedback.

### positive implicit feedback

Positive implicit feedback involves making an inference or assumption that feedback is positive on the basis of activity at the user interface, that activity not being prompted by a request via the user interface itself.

An example of positive implicit feedback involves access or subsequent use of a document from the results. In this case if a user is observed to access a document presented in the ranked results list it is assumed that that particular document is relevant. We have found that this manner of obtaining feedback is particularly advantageous for image searching, or other document searching where a thumbnail of each document in the ranked list is provided. Because thumbnails are present (or any other suitable summary of the information in the whole document) it is likely that access to the document is a good indication of relevance. In some embodiments this type of feedback is referred to as "click through" where a user clicks on a link to a document in the results list to access it. Different grades of positive implicit feedback can be envisaged. For example, if a user copies and pastes a link from the results list, or bookmarks the link this can be taken as high quality positive implicit feedback.

### negative implicit feedback

Negative implicit feedback involves making an inference or assumption that feedback is negative on the basis of absence of activity at the user interface. For example, if a user does not access a document from a results list it can be assumed that that document is not relevant.

We recognize that such different types of feedback information can advantageously be used to improve search results by making search results more relevant. For example this is achieved on an inter-query basis. That is, feedback from past user queries is used to improve future searches made by the same or different users.

In order to make use of the feedback information in an effective manner, which is simple to implement and computationally inexpensive, we accumulate queries in one or more new fields in the documents. A field (also referred to as a stream) is a data structure associated with a document. For example, a field can be a specified part of a document which has a defined structure. Examples include title, abstract, summary, body, conclusion, references, metadata fields, and anchor text fields. An example of a metadata field is a field containing information about the number of links to and from that document. An anchor text field is used to store text associated with a link to the current document from another document. Thus the anchor text is taken from another document and stored in an anchor text field in the current document. In the present invention we advantageously propose specifying one or more new fields and using those to store query terms which are associated with feedback information. These new fields will be referred to herein as "feedback fields" for clarity. For example, in one embodiment we specify four types of feedback field, one for each of the four types of feedback mentioned above. However, this is not essential. Any suitable number of feedback fields can be used. For example, one feedback field can be used to store a plurality of types of feedback or more than four fields can be used where different grades of feedback information are available. We have found that using fields for feedback information in this way is particularly effective. For example, we could have used the feedback information to modify the query terms of an ongoing search or to modify an indexing process (see below) without storing them in the documents. However, those approaches are complex and especially for the indexing process approach, time consuming.

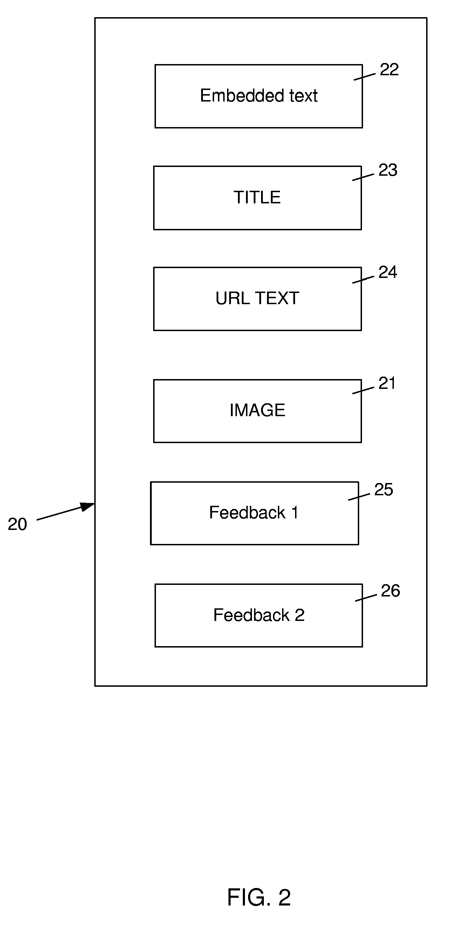

FIG. 2 is a schematic diagram of a document 20 comprising an image and showing document fields 22 to 24 and 25 to 26 suitable for use in an embodiment of the invention. In this case the document fields comprise a field 22 to store any embedded text from a document that the image has been accessed from (for example, a web page that contained the image). A title field 23 is used to store any title associated with the image and a URL text field 24 to store any text associated with a link to the image. The image itself 21 is obtained using a web crawler or other suitable process and in this example two feedback fields 25 and 26 are used to store query terms. The document fields 22 to 24 and 25 to 26 are available but it is not essential that all of them be populated, and for different documents, different ones of the fields can be populated. Also, any suitable document fields can be specified. Thus for different types of documents different document fields will be appropriate.

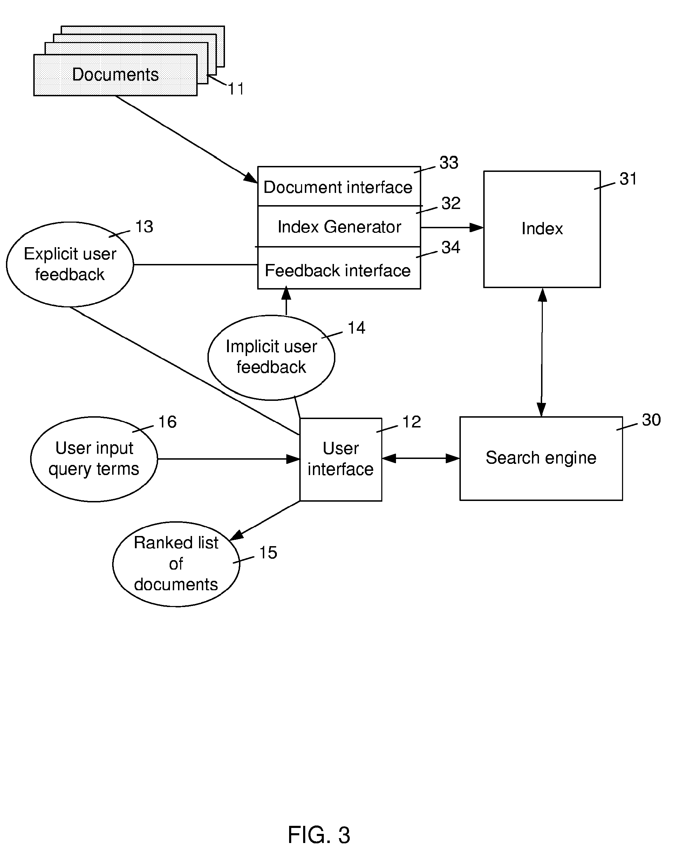

FIG. 3 is a schematic diagram of an embodiment of the information retrieval system of FIG. 1. In this example the ranking system 10 comprises an index generator 32, a search engine 30 and an index 31. The index generator 32 and search engine 30 may be integral although they are shown in FIG. 3 as separate entities for clarity. The index generator 32 comprises a document interface 33 for interfacing with the documents 11. This interface may take any suitable form as known in the art. The index generator 34 also comprises a feedback interface 34 for receiving explicit 1 3 and or implicit 14 feedback from the user interface 12. It is able to use this feedback information to populate feedback fields in the documents 11 via the document interface 33. However, this is not essential. The feedback information can be incorporated into the documents using any suitable entity which can be independent of the index generator 32.

A plurality of documents 11 are available for searching. For example, these may have been obtained using a web crawling process as known in the art or in any other suitable manner. Any number of documents may be searched including document collections contain large numbers (e.g. billions) of documents.

As mentioned previously, it is known to use an index generator to generate an index of documents available to an information retrieval system. For example, in our earlier US patent application "Field Weighting in Text Document Searching" filed on March 18, 2004 which was published on 22 September 2005 as US-2005-0210006-A1 , we describe such an indexing process. In that document we describe an index generator which generates individual document statistics for each document and stores those in an index. The document statistics are based on information from the specified fields in each document. The same process is preferably used in the present invention, except that because we have added feedback fields to various of the documents those feedback fields are used together with any or all of the other document fields to form the index 31. However, it is not essential to use this method of forming the index. Any other suitable method of forming an index can be used provided that it takes account of the feedback field information in the documents.

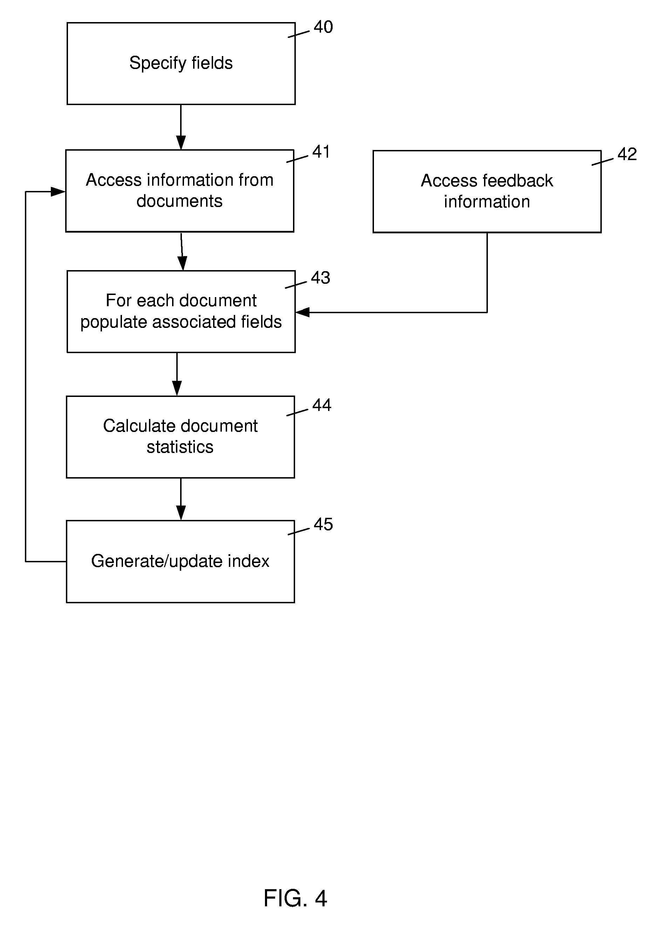

Once formed the index 31 is updated at intervals. This is done because the documents 11 themselves change over time (for example, web sites are updated) and in addition, feedback information is continually being received and added to the documents 11. Any suitable index update interval can be used such as daily, weekly or continual updates to the index. The choice of interval time depends at least in part on processing resources, costs, rate of change in the documents 11 and rate of receipt of feedback information. FIG. 4 is a schematic diagram of the index generation process. Fields are specified, including one or more feedback fields (see box 40). Information is accessed from the documents (see box 41) and feedback information is accessed (see box 42). For each document, fields are then populated where possible (box 43) including feedback fields and document statistics are calculated (box 44) to generate or update the index (box 45).

Explicit 13 and or implicit 14 feedback information is received via the user interface 12 as already described and used to populate feedback fields in the documents 11 themselves or associated with the documents. For a given search, the feedback information comprises:
- the query terms used,
- the identity of the particular document found using those query terms for which the feedback information is available, and
- information about the nature of the feedback (e.g. whether it is explicit, implicit, negative or positive).

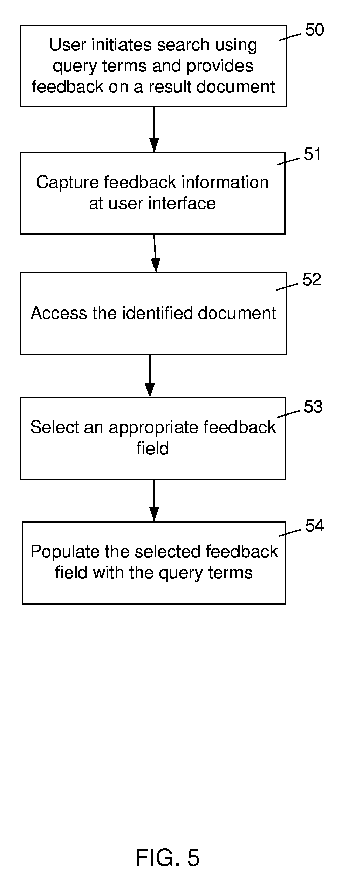

Suppose a user initiates a search using query terms and provides feedback on a result document (see box 50 of FIG. 5). The feedback is captured at a user interface (see box 51). As shown in FIG. 5, the feedback information is used to access the identified document (box 52), select an appropriate feedback field (box 53) in that document (on the basis of the information about the nature of the feedback) and to populate the selected feedback field (or fields) with the query terms (box 54). This is illustrated in the flow diagram of FIG. 5.

In some embodiments, the feedback fields of a given document are emptied after a specified time interval. Alternatively, weights associated with the feedback fields are adjusted over time. In this manner the influence of feedback information can be arranged to reduce over time. However, it is not essential to modify the feedback fields over time in this way. The feedback fields can simply be over written when new feedback information concerning a given document is obtained.

The process of populating feedback fields in the documents 11 is a gradual process which progresses as more and more searches are done and feedback becomes available. Thus the proportion of documents available for searching which have populated feedback fields will increase over time. If a document such as a web page is updated, provision can be made to retain any populated feedback fields associated with that page. Alternatively, these can be deleted. This is a design choice depending on the type of documents being searched and whether updates to those tend to significantly change the content of the documents. Another option is to make an automated assessment as to the scope of change in the update and delete or retain the feedback fields as appropriate.

Once the index 31 has been formed it is possible for the search engine 30 to access or query the index 31 in order to generate a ranked list of documents 15 in response to user query terms 16. Because we have added feedback fields to the documents, there are multiple (a plurality of) document fields available for at least a proportion of the documents 11. In addition, multiple (two or more) query terms 16 can be input by the user to instigate a document search. Thus the search engine is specially arranged to deal with both multiple document fields and multiple query terms. Any suitable search algorithm can be implemented by the search engine provided that it is able to deal with multi-query terms and multi-document fields. Multi-query terms and multi-document fields present particular problems because a suitable method of combining information needs to be developed. For example, a simple (yet unsuitable) method is to calculate a separate score for each document field and them combine the scores linearly using weights. This method does not take account of the fact that a term from the query may match on more than one field; a document might get a high score from matching one query term in several fields while not matching a second query term at all. In our earlier patent application referenced above, we describe a method for combining evidence across fields, query term by query term, which deals with this problem, while allowing fields to be differentially weighted. This is particularly important when multiple query terms may match multiple fields. Thus in a preferred embodiment the search engine implements an algorithm such as described in our earlier patent application referenced above. However, this is not essential. Any suitable search algorithm can be used which combines evidence across document fields, query term by query term and allows document fields to be differentially weighted.

The weights used to weight the document fields during the search algorithm can be obtained in any suitable manner. For example, using a training or tuning process that involves use of evaluated data as known in the art.

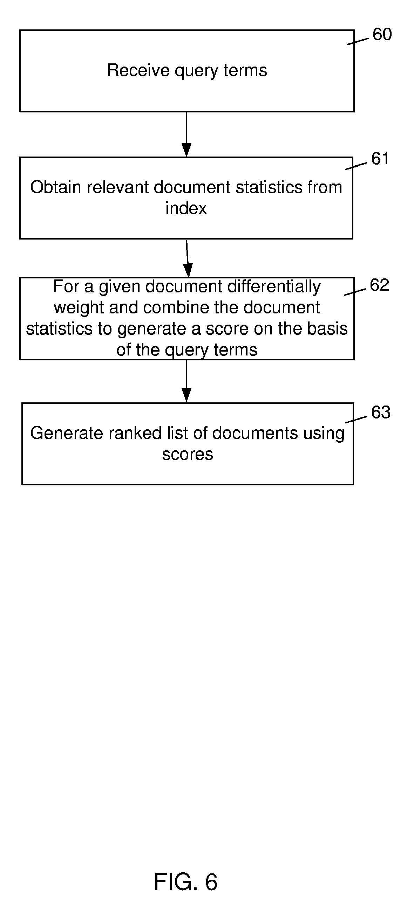

FIG. 6 is a flow diagram of a method of using the information retrieval system of FIG. 1 or FIG. 3. A plurality of query terms are received (see box 60) and provided to the search engine. The search engine obtains relevant document statistics from the index (see box 61) including statistics formed on the basis of the feedback fields. A search algorithm is then used as described above to differentially weight and combine the document statistics to generate a score on the basis of the query terms (see box 62). This is done for each document that is potentially relevant to the query terms, or a subset of those. The scores are then used to generate a ranked list of documents (see box 63).

In a preferred embodiment the information retrieval system is a web image search system and the documents 1 1 are images retrieved from the internet or other documents. An example of this type of document and its associated fields is given in FIG. 2. In the case of image searching, implicit feedback such as click through feedback is likely to be relevant. In addition, the amount of text associated with images retrieved from the web and the relevance of this text is often relatively poor. This makes searching for such documents using text based query terms difficult. In that situation, using feedback information can especially increase relevance of search results. Therefore there are particular advantages when applying the present invention to image searching. Having said that, the invention is in no way limited to image searching.

In an example implementation, the search engine (30 FIG. 3) and index generator (32 FIG. 3) are implemented using computer software supported on any suitable computer processing hardware. For example, the search engine is provided on a server and the index generator on a processor either integral with or independent of the search engine server. The index (31 FIG. 3) formed by the index generator is stored as a database, file, or other suitable data structure using any suitable computer readable storage medium such as a hard disk, magnetic disk, optical disk, magnetic cassettes, flash memory cards, digital video disks, random access memories (RAMs), read only memories (ROMs) and the like.

The user interface (12 FIG. 3) is provided using any suitable hardware such as a display screen and keyboard connected to a computer terminal, a mobile computing device, a personal digital assistant, a smart phone, or any other suitable user interface means.

Communication between the components of the information retrieval system is achieved using any suitable communications means such as wireless communications, physical connections such as local area networks, wide area networks, Ethernets, the Internet, intranets and the like.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

Any range or device value given herein may be extended or altered without losing the effect sought, as will be apparent to the skilled person.

The steps of the methods described herein may be carried out in any suitable order, or simultaneously where appropriate.

Although the present examples are described and illustrated herein as being implemented in a web-based search system, the system described is provided as an example and not a limitation. As those skilled in the art will appreciate, the present examples are suitable for application in a variety of different types of information retrieval systems.

It will be understood that the above description of a preferred embodiment is given by way of example only and that various modifications may be made by those skilled in the art.

## Claims

1. A method of forming an index of documents for use in an information retrieval system, said method comprising the steps of:
(i) specifying a plurality of fields, including at least one feedback field which can be used in association with each document;
(ii) accessing a plurality of documents, and for each of those documents, populating at least some of the fields using information from the accessed documents;
(iii) receiving feedback information comprising a plurality of query terms, an identifier for a particular one of the documents, and information about the type of feedback;
(iv) for the particular one of the documents, populating a feedback field with the plurality of query terms on the basis of the information about the type of feedback;
(v) forming an index of the document on the basis of the populated fields;
(vi) receiving a plurality of query terms;
(vii) obtaining document statistics from the index on the basis of the query terms; and using a search algorithm to generate a ranked list of documents, the search algorithm being suitable for use with a plurality of query terms and a plurality of document fields and arranged to provide differential weighting of the fields.

2. A method as claimed in claim 1 wherein the information about the type of feedback comprises information about whether the feedback is positive or negative.

3. A method as claimed in claim 1 or claim 2 wherein the information about the type of feedback comprises information about whether the feedback is explicit or implicit.

4. A method as claimed in any preceding claim wherein the step of specifying fields comprises specifying a plurality of feedback fields each feedback field being for a different type of feedback.

5. A method as claimed in any preceding claim wherein the step of forming an index comprises generating document statistics on the basis of the fields and at least some feedback fields.

6. A method as claimed in claim 5 wherein said index is repeatedly updated.

7. A method as claimed in claim 6 wherein the index is updated sufficiently often that during a search, feedback information is dynamically incorporated into the documents and used to influence the ongoing search.

8. A method as claimed in claim 6 wherein the feedback information is used to influence searching inter-query.

9. A method as claimed in any preceding claim which comprises emptying the feedback fields after a specified time period.

10. A method as claimed in any preceding claim which comprises adjusting weights associated with the feedback fields on the basis of elapsed time.

11. A method as claimed in any preceding claims wherein the information retrieval system is an image retrieval system and the documents are images.

12. An apparatus for forming an index (31) of documents (11) for use in an information retrieval system, said apparatus comprising:
(i) an index generator (32) arranged to specify a plurality of fields (22, 23, 24, 25, 26), including at least one feedback field (25, 26) which can be used in association with each document;
(ii) the index generator (32) having an interface (33) arranged to access a plurality of documents, the index generator having a processor arranged to, for each of those documents, populate at least some of the fields using information from the accessed documents;
(iii) the index generator having another interface (34) arranged to receive feedback information (1 3, 14) comprising a plurality of query terms, an identifier for a particular one of the documents, and information about the type of feedback;
(iv) the processor of the index generator being arranged to, for the particular one of the documents, populate a feedback field (25, 26) with the plurality of query terms on the basis of the information about the type of feedback;
(v) the processor of the index generator being arranged to form an index of the documents on the basis of the populated fields;
(vi) an interface arranged to receive a plurality of query terms;
(vii) a search engine (30) arranged to obtain document statistics from the index (31) on the basis of the query terms; the search engine comprising a search algorithm arranged to be implemented in the search engine to generate a ranked list of documents, the search algorithm being suitable for use with a plurality of query terms and a plurality of document fields and arranged to provide differential weighting of the fields.

13. An apparatus as claimed in claim 12 wherein the information about the type of feedback comprises information about whether the feedback is positive or negative.

14. An apparatus as claimed in claim 12 or claim 1 3 wherein the information about the type of feedback comprises information about whether the feedback is explicit or implicit.

15. An apparatus as claimed in any of claims 12 to 14 wherein the index generator is arranged to generate document statistics on the basis of the fields and at least some feedback fields.

16. An apparatus as claimed in claim 1 5 wherein said index generator is arranged to repeatedly update the index.

17. An apparatus as claimed in any of claims 12 to 16 wherein the information retrieval system is an image retrieval system and the documents are images.

18. An apparatus as claimed in any of claims 12 to 17 wherein the interface (34) of the index generator that is arranged to receive feedback information is arranged to receive information about whether the feedback is positive or negative.

19. A computer program comprising computer program code means adapted to perform all the steps of any of claims 1 to 11 when said program is run on a computer.

20. A computer program as claimed in claim 19 embodied on a computer readable medium.
